# EUROPÄISCHE PATENTSCHRIFT

(11) **EP 2 336 594 B1**
(45) Veröffentlichungstag und Bekanntmachung des Hinweises auf die Patenterteilung: **12.02.2014**
(21) Anmeldenummer: 10015341.0
(22) Anmeldetag: 06.12.2010
(51) Int. Cl.: F16F 1/371, F01N 13/18

(54) **Elastisches Lager zum Aufhängen eines dynamisch beanspruchten Funktionsteils**
Elastic bearing for suspending a function component subjected to dynamic loads
Palier élastique destiné à la suspension d'un élément fonctionnel à sollicitation dynamique

(30) Priorität: 17.12.2009 DE 102009058731
(43) Veröffentlichungstag der Anmeldung: 22.06.2011
(73) Patentinhaber: Anvis Deutschland GmbH, 36396 Steinau an der Strasse (DE)
(72) Erfinder: Gromes, Marin, 36396 Steinau an der Straße (DE)
(74) Vertreter: Schmid, Nils T.F.

(56) Entgegenhaltungen:
- EP-A1- 0 073 299
- WO-A1-2006/105846
- DE-A1- 2 621 771
- DE-A1- 3 937 768
- DE-A1- 10 147 514
- DE-C1- 19 906 548

## Beschreibung

Die Erfindung betrifft ein elastisches Lager zum Aufhängen eines dynamisch beanspruchten Funktionsteils, wie einer Abgasanlage, eines Kraftfahrzeugs an eine tragende Struktur, wie eine Kraftfahrzeugkarosserie.

Es gibt eine Vielzahl von derartigen elastischen Aufhängungen insbesondere auf dem Gebiet der Abgasanlagenlagerung für ein Kraftfahrzeug. Es kommt im Allgemeinen darauf an, derartige Lager möglichst dauerlastbeständig bei Gewährleistung einer geringen Strukturdimensionierung mit geringerem Gewicht auszulegen. Ein derartiges Lager, das schon in einer sehr zufriedenen Weise derartige Bedingungen erfüllt, ist aus DE 103 11 196 A1 bekannt. Daraus ist eine elastische Aufhängung mit einem Metallrahmen bekannt, der von einem Elastomermaterial umspritzt ist. Der Metallrahmen definiert auch Lagerbuchsen zum Anbinden der elastischen Aufhängung an der Abgasanlage und der Kraftfahrzeugkarosserie. Die Lagerbuchse für die schwingende Abgasanlage stützt sich an dem Metallrahmen über zwei Elastomerdruckschenkel ab. Eine derartige bekannte Aufhängeschlaufe hat den Vorteil kleiner Abmessung und besitzt eine Steifigkeit in Vertikalrichtung, die im Wesentlichen der Steifigkeit in der Querrichtung entspricht, die sich senkrecht zur Fahrtrichtung des Kraftfahrzeugs erstreckt. Ein derartiges Steifigkeitsverhältnis von Quer- zu Vertikalrichtung mit 1:1 auszuführen, hat sich als besonders vorteilhaft für die zu erwartenden Lastschwingungen an einer Abgasanlage herausgestellt. Die bekannte Schlaufenaufhängung hat allerdings den Nachteil, dass der Rahmen, an dem sich die Elastomerdruckschenkel abstützen, relativ steif und damit aus einem entsprechend festem Material, wie Metall oder Leichtmetall, ausgebildet werden muss. Die dort auftretenden hohen, dynamischen statischen Druckkräfte sind gemäß dem Stand der Technik mittels Metallelementen realisiert. Diese starren Metallrahmen stellen allerdings einen hohen Gewichtsanteil für die elastische Schlaufe dar.

Ein gattungsgemäßes elastisches Lager ist als Abgasleitungsaufhängung aus einer Elastomerschlaufe, in die ein Gelenkkettenring eingebettet ist, aus EP 0 073 299 A1 bekannt. Weitere Lager zum Aufhängen einer Abgasanlage offenbaren DE 199 06 548 C1, WO 2006/105846 A1, DE 101 47 514 A1, DE 26 21 771 A1 und DE 39 37 768 A1.

Es ist Aufgabe der Erfindung, die Nachteile des Stands der Technik zu überwinden, insbesondere ein elastisches Lager mit einem günstigen Federsteifigkeitsverhältnis von insbesondere 1:1 bereitzustellen, wobei ein möglichst geringes Gewicht bei einer hohen Dauerfestigkeit gewährleistet sein soll. Insbesondere ist es Aufgabe der Erfindung, eine ausreichend feste, elastische Aufhängung zur Verfügung zu stellen, welche keine geschlossene Rahmenstruktur insbesondere aus Metall mehr aufweist.

Diese Aufgabe wird durch die Merkmale von Anspruch 1 gelöst. Danach umfasst das elastische Lager zum Aufhängen eines dynamisch beanspruchten Funktionsteils, wie einer Abgasanlage, einen Federkörper aus Elastomerwerkstoff und eine mit dem Federkörper fest verbundene Versteifung aus einem gegenüber dem Elastomerwerkstoff starreren Material, wie Kunststoff. Die Versteifung hat zwei insbesondere innerhalb des Elastomerkörpers eingebetteten starre Versteifungsabschnitte, die scharniergelenkig miteinander beweglich gekoppelt sind. Durch die erfindungsgemäße Maßnahme, zwei starre Versteifungsabschnitte durch eine scharniergelenkartig ausgebildete Kopplung miteinander beweglich zu verbinden, ist es möglich, eine elastische Aufhängeschlaufe frei von jeglichen metallischen Versteifungselementen zu bilden, wobei ein für die Abgasanlage günstiges Steifigkeitsverhältnis von 1:1 zwischen der Quer- und Vertikalsteifigkeit bereitgestellt wird. Somit kann für ein elastisches Lager zum Aufhängen einer Abgasanlage ein geringgewichtiges Bauteil bei kleinen Abmessungen geschaffen werden.

Bei der Erfindung ist die starre Versteifung mit einem Filmscharnier, gebildet, das die Versteifungsabschnitte aneinander schwenkbar insbesondere im Wesentlichen in einer einzigen Schwenkebene koppelt. Die Schwenkebene wird durch den einzigen Bewegungsgfreiheitsgrad des Scharniergelenks definiert. Vorzugsweise ist jeder Versteifungsabschnitt durch eine Versteifungsplatte gebildet, die insbesondere zum Sparen von Gewicht mit Löchern versehen ist. Auf diese Weise müssen keine Einbußen hinsichtlich der Steifigkeit der Versteifungsplatten hingenommen werden.

Bei einer bevorzugten Ausführung der Erfindung ist die Versteifung als Platte aus einem starren Werkstoff, wie Kunststoff, beispielsweise Polypropylen, gebildet. Die Platte kann vorzugsweise durch das Scharniergelenk, die durch eine im Wesentlichen in der Mitte der Platte liegende Werkstoffschwächung insbesondere durch ein Filmscharnier, realisiert ist, in zwei plattenförmige Versteifungsplattenabschnitte unterteilt sein. Vorzugsweise hat die Werkstoffschwächung einen flexiblen, die Versteifungsplattenabschnitte verbindenden Plattenstreifen insbesondere im Wesentlichen konstanter, gegenüber den Versteifungsplattenabschnitten reduzierter Stärke. Dieser Plattenstreifen kann vorzugsweise konzentrisch zu einer Lagerachse einer zylindrischen, in den Federkörper eingebrachten Anschlusslagerbuchse für das Funktionsteil oder die tragende Struktur gekrümmt sein. Auf diese Weise ist gewährleistet, dass die Last, welche über die Anschlusslagerbuchse in den Federkörper und somit in den geschwächten Plattenstreifen eingeleitet ist, zur Werkstoffschwächung gleichgerichtet ist.

Bei einer Weiterbildung der Erfindung ist die Versteifung durch zwei insbesondere im Wesentlichen identische, vorzugsweise separate Einlegeteile gebildet. Die Einlegeteile können jeweils zwei über ein Scharniergelenk miteinander beweglich gekoppelte Versteifungsabschnitte oder -platten aufweisen. Vorzugsweise sind wenigstens zwei separate Einlegeteile in dem Elastomerwerkstoff des Federkörpers vollständig eingebettet, insbesondere umspritzt.

Bei einer Weiterbildung der Erfindung sind die zwei Versteifungsabschnitte und das Scharniergelenk insbesondere jedes einzelnen Einlegeteils aus einem Werkstoffstück, insbesondere aus einem Kunststoffstück, vorzugsweise einem Polypropylenstück, gespritzt, gefertigt.

Vorzugsweise ist/sind in dem Elastomerkörper eine Anschlussausnehmung, insbesondere ein Durchgangsloch oder eine Lagerbuchse, zum Anbinden des Funktionsteils oder der tragenden Struktur, insbesondere eine weitere Anschlussausnehmung, insbesondere ein weiteres Durchgangsloch oder Durchgangsbuchse, zum Anbinden der tragenden Struktur oder des Funktionsteils ausgebildet. Die Versteifung, insbesondere das Scharniergelenk oder Filmscharnier der Versteifung, erstreckt sich insbesondere konzentrisch und teilweise um die jeweilige Anschlussausnehmung.

Vorzugsweise ist die wenigstens eine Anschluss-Ausnehmung eine Lagerbuchse mit einer Lagerachse, die insbesondere horizontal senkrecht zur Vertikalhängerichtung des Lagers und insbesondere im Wesentlichen parallel zur Fahrtrichtung des Fahrzeugs ausgerichtet ist. Die wenigstens eine Anschluss-Ausnehmung nimmt vorzugsweise einen Lagerbolzen des Funktionsteils und/oder der tragenden Struktur ohne eine Zwischenanordnung einer starren Verstärkungshülse auf.

Bei einer bevorzugten Ausführung der Erfindung sind die zwei Anschluss-Ausnehmungen in einer vertikalen Hängerichtung diametral gegenüberligend übereinander angeordnet. Vorzugsweise ist die wenigstens eine Anschluss-Ausnehmung in einem Eckbereich des im vertikalen Querschnitt mehreckigen, vorzugsweise drei - oder viereckigen, insbesondere quadratischen Federkörpers ausgebildet. Es sei klar, dass etwa in der Mitte des mehreckigen Federkörpers vorzugsweise eine einzige Aussparung vorgesehen sein kann, um die Federsteifigkeit in die Vertikalrichtung sowie Querrichtung einstellen zu können.

Bei einer Weiterbildung der Erfindung hat der Federkörper wenigstens drei, vorzugsweise vier, scharniergelenkgemäß deformierbare Verformungsabschnitte, insbesondere an einem Eck- oder Knickbereich des Federkörpers. Dabei kann der jeweilige Verformungsabschnitt frei von Material der Versteifung oder mit einem solchen Material versteift sein.

Vorzugsweise ist an wenigstens einem der Verformungsabschnitte ein Versteifungsscharniergelenk benachbart angeordnet, so dass die Bewegungsfreiheit des wenigstens einen Verformungsabschnitts im Wesentlichen bis auf eine Scharniergelenkbewegung in einer einzigen Schwenkebene beschränkt ist und/oder der wenigstens eine Verformungsabschnitt einen ersten geringen Versteifungsgrad für eine Scharniergelenkbewegung in einer Schwenkebene und einen zweiten größeren Versteifungsgrad in den gegenüber der Scharniergelenkbewegung restlichen Bewegungsrichtungen verliehen sind. Der erste Versteifungsgrad ist kleiner als der zweite Versteifungsgrad, insbesondere weil das Scharniergelenk lediglich in der bevorzugten Scharniergelenkbewegungsrichtung eine Bewegung zulassen soll, während eine Torsion von einer Bewegung entgegen der Schwenkbewegungsrichtung durch die Struktur des Scharniergelenks im Wesentlichen blockiert ist. Vorzugsweise legt der versteifte Verformungsabschnitt eine im Wesentlichen horizontale Schwenkachse fest, wobei insbesondere mehrere Schwenkachsen von Verformungsabschnitten zueinander parallel angeordnet sind.

Bei der Weiterbildung der Erfindung hat der Federkörper einen ringförmigen, umlaufenden Grundköper von wenigstens drei Eckbereichen, vorzugsweise vier Eckbereichen. Als ringförmiger Grundkörper ist ein Grundkörper aus Elastomerkörpermaterial verstehbar, der wenigstens eine insbesondere symmetrische, allerdings auch nicht rotationsförmige Aussparung aufweisen kann. Zumindest ist die umlaufende Außenseite des ringförmigen Grundkörpers ununterbrochen. Vorzugsweise ist an wenigstens einem Eckbereich eine Anschluss-Ausnehmung, vorzugsweise an sich diametral gegenüberliegenden Eckbereichen, jeweils eine Anschluss-Ausnehmung ausgebildet. Als Anschluss-Ausnehmung kann eine Lagerbuchse verstanden sein. Des Weiteren kann wenigstens ein Eckbereich, vorzugsweise zwei sich diametral gegenüberliegende Eckbereiche jeweils, frei eines Scharniergelenks, insbesondere eines Versteifungsmaterials, und/oder frei einer Anschluss-Ausnehmung sein, also als Vollmaterial ausgebildet sein.

Die ausschließlich aus Elastomermaterial gebildeten Eckbereiche können in einer horizontalen Ebene liegen, während die Eckbereiche mit Anschluss-Ausnehmungen in einer Vertikalebene ausgerichtet sein können.

Bei einer bevorzugten Ausführung der Erfindung hat der Federkörper einen ringförmigen Grundkörper mit einer Umfangsaußenseite, die insbesondere eine ununterbrochene Außenfläche festlegt. Des Weiteren hat der ringförmige Grundkörper eine einzige, im Wesentlichen zentrale, den Federweg des Lagers insbesondere in vertikaler Hängerichtung bestimmende Aussparung. Die Aussparung erreicht die gewünschte geringe Steifigkeit des Federkörpers in der vertikalen Hängerichtung. Vorzugsweise ist die Aussparung im vertikalen Querschnitt durch zwei Aussparungsabteile definiert, die nicht vollständig getrennt sind, allerdings durch eine Querschnittsverjüngung voneinander strukturell teilsepariert sind. Die beiden Aussparungsabteile haben eine gegenüber der Außenform im Wesentlichen gleich geformte Innenabmessung geringerer Dimension. Die Querschnittsverjüngung bildet vorzugsweise zwei, eine vertikale Bewegung von zwei in vertikaler Hängerichtung übereinander angeordnete Anschluss-Ausnehmungen aufeinander zu begrenzende, sich in Hängerichtung diametral gegenüberliegende Anschlagsflächen.

Bei einer bevorzugten Ausführung der Erfindung ist die Aussparung insbesondere frei jeglicher Lagerteile ungefüllt. Weiterhin können die zwei Aussparungsabteile ausschließlich von einer Um-fangsinnenseite des Federkörpers begrenzt sein, die entsprechend der Grundform der Umfangsaußenseite insbesondere gemäß einem Quader oder Würfel, geformt ist. Die sich in einem kürzesten Radialabstand gegenüberliegenden Seitenflächen der Umfangsaußen- und -innenseite des Federkörpers können vorzugsweise zueinander parallel liegen.

Bei einer bevorzugten Ausführung der Erfindung ist das Scharniergelenk der Versteifung einer Anschluss-Ausnehmung örtlich benachbart zugeordnet, so dass die Anschluss-Ausnehmung aufgrund der Scharniergelenkversteifung gestärkt ist. Die Scharniergelenkversteifung lässt allerdings eine Scharnierschwenkbewegung in einer einzigen Schwenkbewegungsrichtung ohne Weiteres zu. Vorzugsweise ist zwischen der benachbarten Umfangsaußenseite unter dieser Anschluss-Ausnehmung das Scharniergelenk, insbesondere das Filmscharnier, angeordnet.

Bei einer bevorzugten Ausführung der Erfindung ist das elastische Lager ausschließlich aus dem Federkörper und der Versteifung ausgeführt. Keine weiteren Bestandteile bilden das elastische Lager. Insbesondere sind keine Metallteile, wie voll umlaufende Rahmenteile, vorgesehen. Die jeweiligen Anschluss-Ausnehmungen sind dazu ausgeführt, einen Lagerbolzen des Funktionsteils und/oder der tragenden Struktur direkt aufzunehmen, ohne die Zwischenanordnung einer starren Hülse zu nutzen.

Weitere Eigenschaften, Vorteile und Merkmale der Erfindung werden die durch vorliegende Beschreibung einer bevorzugten Ausführung der Erfindung anhand der beiliegenden Zeichnungen deutlich, in denen zeigen:
- Figur 1: eine perspektivische Ansicht eines erfindungsgemäßen, elastischen Lagers, wobei das Elastomermaterial zur besseren Sichtbarkeit der Versteifung durchsichtig ist;
- Figur 2: eine Querschnittsansicht des erfindungsgemäßen elastischen Lagers gemäß Figur 1;
- Figur 3: eine weitere Querschnittsansicht des erfindungsgemäßen elastischen Lagers gemäß den Figuren 1 und 2;
- Figur 4: eine Seitenansicht eines Paars Versteifungseinlegeteile; und
- Figur 5: eine weitere Seitenansicht des Paars Versteifungseinlegeteile gemäß Figur 4.

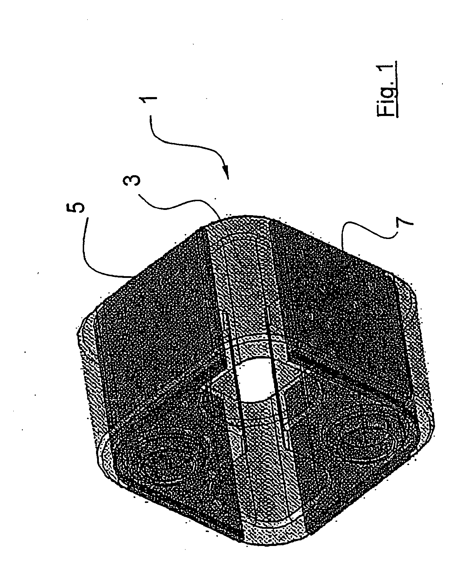

In den Figuren 1 bis 3 ist das erfindungsgemäße elastische Lager zum Aufhängen einer Abgasanlage eines Kraftfahrzeugs im Allgemeinen mit der Bezugsziffer 1 versehen. Das elastische Lager 1 besteht aus zwei Hauptbestandteilen, nämlich einem im Querschnitt viereckigen Elastomerkörper 3 und eine Versteifungsanordnung bestehend aus zwei Versteifungseinlegeteilen 5, 7, die in dem Elastomerkörper 3 eingebettet sind.

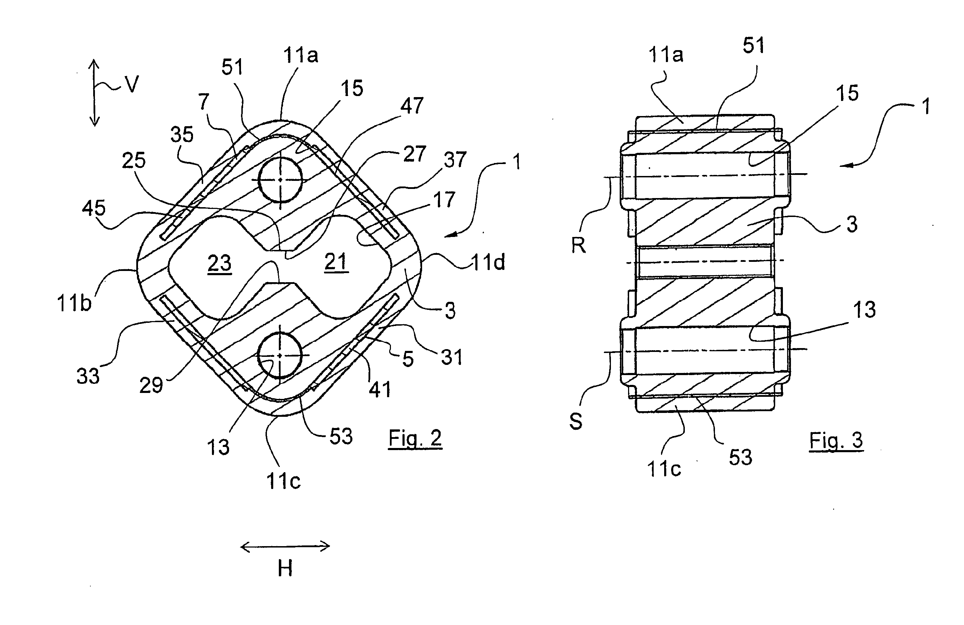

Der Elastomerkörper 3 hat wie in der Querschnittsansicht gemäß Figur 2 ersichtlich ist, eine quadratische Querschnittsgrundform mit vier gerundeten Eckbereichen 11 a bis 11d, welche als bevorzugte Deformationsabschnitte des Elastomerkörpers 3 dienen.

Wie in Figur 2 ersichtlich ist, liegen zwei Eckbereiche 11 a, 11c diametral in einer vertikalen Hängerichtung V, während in Horizontalrichtung H zwei Eckbereiche 11b und 11d diametral gegenüber liegen.

An dem oberen Eckbereich 11a und am unteren Eckbereich 11c ist jeweils eine Lagerbuchse 13, 15 als Durchgangsloch in dem Federkörper 3 derart eingebracht, dass die Lagerbuchsen 13, 15 in der vertikalen Hängerichtung V diametral gegenüber liegen. Die Lagerbuchsen 13, 15 definieren jeweils horizontale Lagerachsen R, S, die zueinander parallel sind und sich im Wesentlichen in Fahrtrichtung des Kraftfahrzeugs erstrecken.

Für eine ausreichende Dauerfestigkeit des elastischen Lagers 1 ist der Elastomerkörper 3 in dem Bereich der Lagerbuchsen 13, 15 besonders stark ausgeführt. Die Lagerbuchsen 13, 15 dienen dazu, einen jeweiligen Lagerbolzen der Abgasanlage (nicht dargestellt) und der Fahrzeugkarosserie (nicht dargestellt) fest aufzunehmen, um die elastische Anbindung der Abgasanlage an die Kraftfahrzeugkarosserie zu schaffen.

Von den horizontalen Eckbereichen 11b zu 11d erstreckt sich eine im Querschnitt hantelförmige, im Wesentlichen zentral ausgebildete Aussparung 17, die achsensymmetrisch zur Vertikalachse V des elastischen Lagers 1 geformt ist. Die Aussparung 17 umfasst zwei Aussparungsabteile 21, 23, die jeweils benachbart einem horizontalen Eckbereich 11b und 11d liegen. Die Aussparungsabteile 21, 23 sind ausschließlich durch den Elastomerkörper 3 begrenzt und haben im Wesentlichen die gleiche Außenform, wie die Außenumfangsform des elastischen Elastomerkörpers 3.

Wie in Figur 2 ersichtlich ist, sind die Aussparungsabteile 21, 23 durch eine Verjüngung voneinander strukturell getrennt, wobei die Verjüngung 25 zwei Anschlagsflächen 27, 29 definiert, welche, wenn sie sich kontaktieren, ein weiteres Aufeinanderzubewegen der Lagerbuchse 13, 15 begrenzt.

Wie oben bereits angedeutet, ist der Elastomerkörper 3 im Wesentlichen in einer Ringform, d.h. in einer die Aussparung 17 umgebenden, ununterbrochenen Ringstruktur mit sich wesentlich gerade erstreckenden Armabschnitten 31 bis 37 ausgebildet.

Jeder Armabschnitt 31 bis 37 ist durch eine Versteifungsplatte 41 bis 47 verstärkt. Jede Versteifungsplatte hat ein freies Ende und ein scharnierseitiges Ende. Die scharnierseitigen Enden zweier benachbarter Versteifungsplatten 31, 33, 41, 43 und 45, 47 sind über ein Filmscharnier 51, 53 miteinander verbunden.

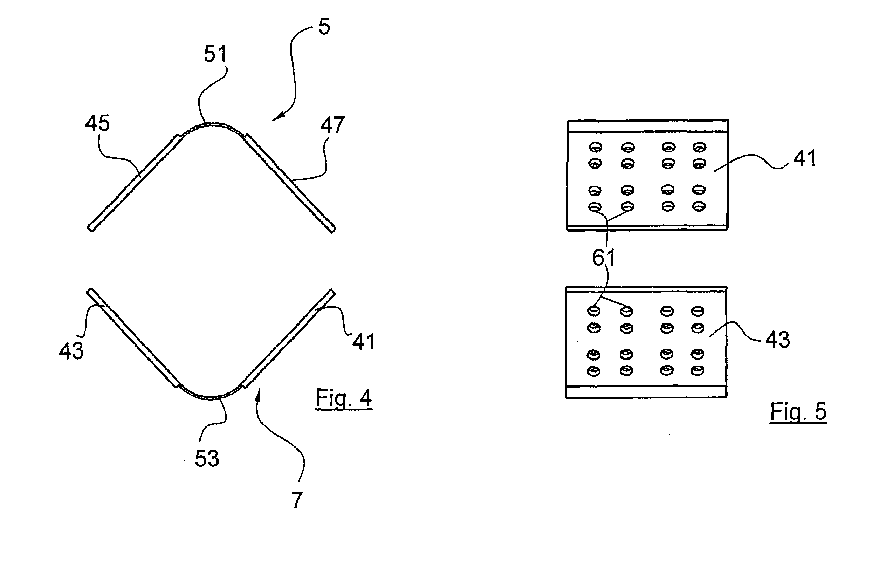

Die Filmscharniere 51, 53 sind jeweils als flexible, dünnwandige Streifen ausgeführt, wie insbesondere in Figur 2 und 3 ersichtlich ist, damit ein Verschwenken der Versteifungsplatten 41, 47 um eine horizontale Schwenkachse (nicht näher dargestellt) zueinander möglich ist. Gleichzeitig ist allerdings die Filmscharnierstruktur bewegungsbeschränkend für eine Torsion der Versteifungsplatten zueinander oder einer Biegung der Versteifungsplatte um eine zur horizontalen Achse senkrechten Schwenkachse. Die Versteifungsplatten 41, 43 sowie 45, 47 und die Filmscharniere 51 und 53 bilden jeweils als Einlegeteil 5, 7 eine einstückige Struktur, welche als Versteifungseinlegeteil bezeichnet ist und in Figur 4 als Paar dargestellt ist.

Wie in Figur 5 dargestellt ist, haben die Versteifungsplatten 41 bis 47 jeweils eine Vielzahl von regelmäßig angeordneten Bohrungen 61, um eine weitere Gewichtsreduzierung zu erreichen, ohne die Festigkeit und Stabilität der Versteifungsplatten zu beschränken.

Die Versteifungsplatten sowie das Filmscharnier 51, 53 sind jeweils für ein Versteifungseinlegeteil aus einem Polypropylenstück gespritzt.

Das erfindungsgemäße elastische Lager ermöglicht eine dauerfeste elastische Aufhängung für eine Abgasanlage mit einem Steifigkeitsverhältnis in Querrichtung H und Vertikalrichtung V von etwa 1:1, wobei ein äußerst geringes Gewicht insbesondere aufgrund des fehlenden Einsatzes von Metall erreicht ist. Des Weiteren ist eine elastische Schlaufe für eine Abgasanlage bereitgestellt, welche ohne vollständig umlaufende Rahmenstruktur auskommt, wobei trotzdem eine ausreichende Steifigkeit erreicht ist.

### Bezugszeichenliste

- 1: elastisches Lager
- 3: Elastomerkörper
- 5, 7: Versteifungseinlegeteile
- 11a bis 11 d: Eckbereiche
- 13, 15: Lagerbuchsen
- 17: Aussparung
- 21, 23: Aussparungsabteile
- 25: Verjüngung
- 27,29: Anschlagsflächen
- 31 bis 37: Armabschnitte
- 41 bis 47: Versteifungsplatten
- 51, 53: Filmscharnier
- 61: Bohrungen

- H: Horizontalbereich
- R, S: horizontale Lagerachsen
- V: vertikale Hängerichtung

## Patentansprüche

1. Elastisches Lager (1) zum Aufhängen eines dynamisch beanspruchten Funktionsteils, wie einer Abgasanlage, eines Kraftfahrzeugs an eine tragende Struktur, wie eine Kraftfahrzeugkarosserie, umfassend einen Federkörper (3) aus Elastomerwerkstoff und eine mit dem Federkörper (3) fest verbundene Versteifung (5; 7) aus einem gegenüber dem Elastomerwerkstoff starreren Material, wie Kunststoff, **dadurch gekennzeichnet, dass** die Versteifung (5; 7) zwei Versteifungsabschnitte (41, 43; 45, 47) umfasst und mit einem Filmscharnier (53; 51) ausgebildet ist, das die Versteifungsabschnitte (41, 43; 45, 47) scharniergelenkig aneinander schwenkbar koppelt.

2. Lager (1) nach Anspruch 1, **dadurch gekennzeichnet, dass** das Filmscharnier (53; 51) die Versteifungsabschnitte (41, 43; 45, 47) im Wesentlichen in einer einzigen Schwenkebene koppelt und/oder die Versteifungsabschnitte (41, 43; 45, 47) jeweils durch eine Versteifungsplatte gebildet sind, die insbesondere mehrere Löcher (61) aufweist.

3. Lager (1) nach Anspruch 1 oder 2, **dadurch gekennzeichnet, dass** die Versteifung (5; 7) als Platte aus einem starren Werkstoff, wie Kunststoff, beispielsweise Polypropylen, ausgebildet ist, die durch das Scharniergelenk (53; 51), das durch eine im Wesentlichen in der Mitte der Platte liegende Werkstoffschwächung realisiert ist, in zwei plattenförmige Versteifungsabschnitte (41, 43; 45, 47) unterteilt ist, wobei insbesondere die Werkstoffschwächung einen flexiblen, die Versteifungsabschnitte (41, 43; 45, 47) verbindenden Plattenstreifen insbesondere im Wesentlichen konstanter, gegenüber den Versteifungsabschnitten (41, 43; 45, 47) reduzierter Stärke aufweist, welcher Plattenstreifen vorzugsweise konzentrisch zu einer Lagerachse (S; R) einer zylindrischen, in dem Federkörper (3) eingebrachten Anschluss-Lagerbuchse (13; 15) für das Funktionsteil oder die tragende Struktur gekrümmt ist.

4. Lager (1) nach einem der vorstehenden Ansprüche, **dadurch gekennzeichnet, dass** die Versteifung (5; 7) durch zwei insbesondere im Wesentlichen identisch gebildete, vorzugsweise separate Einlegeteile gebildet ist, die jeweils durch zwei scharniergelenkig miteinander beweglich gekoppelte Versteifungsabschnitte (41, 43; 45, 47) gebildet sind und/oder in dem Elastomerwerkstoff des Federkörpers (3) vollständig eingebettet, insbesondere umspritzt, sind.

5. Lager (1) nach einem der Ansprüche 2 bis 4, **dadurch gekennzeichnet, dass** die zwei Versteifungsabschnitte (41, 43; 45, 47) und das Scharniergelenk (53; 51) insbesondere jedes einzelnen Einlegeteils aus einem Werkstoffstück, insbesondere aus einem Kunststoffstück gespritzt, gefertigt sind.

6. Lager (1) nach einem der vorstehenden Ansprüche, **dadurch gekennzeichnet, dass** der Elastomerkörper (3) eine Anschluss-Ausnehmung, insbesondere ein Durchgangsloch, zum Anbinden des Funktionsteils oder der tragenden Struktur und insbesondere eine weitere Anschluss-Ausnehmung, insbesondere ein weiteres Durchgangsloch, zum Anbinden der tragenden Struktur oder des Funktionsteils aufweist, wobei die Versteifung (5; 7) sich teilweise um die wenigstens eine Anschluss-Ausnehmung erstreckt.

7. Lager (1) nach Anspruch 6, **dadurch gekennzeichnet, dass** die wenigstens eine Anschluss-Ausnehmung eine Lagerbuchse (13; 15) mit einer Lagerachse (S; R) ist, die insbesondere horizontal (H), senkrecht zur vertikalen Hängerichtung (V) des Lagers ist, und/oder die wenigstens eine Anschluss-Ausnehmung einen Lagerbolzen des Funktionsteils und/oder der tragenden Struktur ohne eine Zwischenanordnung einer starren Verstärkungshülse aufnimmt.

8. Lager (1) nach Anspruch 6 oder 7, **dadurch gekennzeichnet, dass** die zwei Anschluss-Ausnehmungen in einer vertikalen Hängerichtung (V) übereinander angeordnet sind und/oder die wenigstens eine Anschluss-Ausnehmung in einem Eckbereich des im vertikalen Querschnitt mehreckigen, vorzugsweise drei- oder viereckigen, insbesondere quadratischen Federkörpers (3) ausgebildet ist.

9. Lager (1) nach einem der vorstehenden Ansprüche, dadurch g**ekennzeichnet**, dass der Federkörper (3) wenigstens drei, vorzugsweise vier, scharniergelenkgemäß deformierbare Verformungsabschnitte insbesondere an einem Eck- oder Knickbereich (11a, 11b, 11c, 11d) des Federkörpers (3) umfasst, wobei insbesondere an wenigstens einem der Verformungsabschnitte ein Versteifungsscharniergelenk angeordnet ist, sodass die Bewegungsfreiheit des wenigstens einen Verformungsabschnitts im Wesentlichen bis auf eine Scharniergelenkbewegung in einer Schwenkebene beschränkt ist und/oder dem wenigstens einen Verformungsabschnitt einen ersten geringen Versteifungsgrad für eine Scharniergelenkbewegung in einer Schwenkebene und einen zweiten größeren Versteifungsgrad in den gegenüber der Scharniergelenkbewegung restlichen Bewegungsrichtungen verliehen sind, wobei der erste Versteifungsgrad kleiner als der zweiter Versteifungsgrad ist, und/oder dass der versteifte Verformungsabschnitt jeweils eine im wesentlichen horizontale Schwenkachse definiert, wobei insbesondere die mehreren Schwenkachsen zueinander parallel angeordnet sind.

10. Lager (1) nach einem der vorstehenden Ansprüche, **dadurch gekennzeichnet, dass** der Federkörper (3) einen ringförmig umlaufenden Grundkörper mit wenigsten drei Eckbereichen, vorzugsweise vier Eckbereichen (11a, 11b, 11c, 11d), aufweist, wobei an wenigsten einem Eckbereich (11a, 11c) eine Anschluss-Ausnehmung, vorzugsweise an sich zwei diametral gegenüberliegenden Eckbereichen (11a; 11c) jeweils eine Anschluss-Ausnehmung, ausgebildet ist und wenigsten ein Eckbereich (11b; 11d), vorzugsweise zwei sich diametral gegenüberliegende Eckbereiche (11b, 11d) jeweils, frei eines Scharniergelenks, insbesondere eines Versteifungsmaterials, und/oder frei einer Anschluss-Ausnehmung ist.

11. Lager (1) nach einem der vorstehenden Ansprüche, **dadurch gekennzeichnet, dass** der Federkörper (3) einen ringförmigen Grundkörper mit einer Umfangsaußenseite und einem zentralen, den Federweg des Lagers insbesondere in vertikaler Hängerichtung (V) bestimmenden Aussparung aufweist, die insbesondere im vertikalen Querschnitt durch zwei Aussparungsabteile (21, 23) definiert ist, die insbesondere durch eine Querschnittverjüngung von einander getrennt sind, die insbesondere zwei, eine vertikale Bewegung von zwei in vertikaler Hängerichtung (V) übereinander angeordnete Anschluss-Ausnehmungen auf einander zu begrenzende, sich in Hängerichtung (V) diametral gegenüberliegende Anschlagsflächen (29; 25) bildet.

12. Lager (1) nach Anspruch 11, **dadurch gekennzeichnet, dass** die Aussparung frei jeglicher Lagerteile ungefüllt ist und/oder die zwei Aussparungsabteile (21, 23) von einer Umfangsinnenseite des Federkörpers (3) begrenzt ist, die entsprechend der Grundform der Umfangsaußenseite, insbesondere gemäß einem Quader oder Würfel, des Lagers geformt ist, wobei die sich in einem kürzesten Radialabstand gegenüberliegenden Seitenflächen der Umfangsaußen- und -innenseite parallel zueinander liegen.

13. Lager (1) nach einem der Ansprüche 6-8 oder 10-12, **dadurch gekennzeichnet, dass** das Scharniergelenk (53; 51) einer Anschluss-Ausnehmung örtlich benachbart zugeordnet und zwischen der benachbarten Umfangsaußenseite und dieser Anschluss-Ausnehmung (13; 15) angeordnet ist.

14. Lager (1) nach einem der Ansprüche 6-8 oder 10-13, **dadurch gekennzeichnet, dass** es ausschließlich aus dem Federkörper (3) und der Versteifung (5; 7) besteht und dass die wenigstens eine Anschluss-Ausnehmung zum direkten Aufnehmen eines Lagerbolzens des Funktionsteils und/oder der tragenden Struktur ausgelegt ist.

## Claims

1. An elastic bearing (1) for suspending a dynamically loaded functional part, such as an exhaust system, of a motor vehicle on a supporting structure, such as a motor vehicle body, comprising a spring body (3), which consists of an elastomer material, and a reinforcement (5; 7), which is connected fixedly to the spring body (3) and consists of a more rigid material than the elastomer material, such as plastic, **characterised in that** the reinforcement (5; 7) comprises two reinforcement sections (41, 43; 45, 47) and is formed with a living hinge (53; 51), which couples the reinforcement sections (41, 43; 45, 47) to each other in a hinged, pivotable manner.

2. The bearing (1) according to Claim 1, **characterised in that** the living hinge (53; 51) couples the reinforcement sections (41, 43; 45, 47) essentially in a single pivot plane and/or the reinforcement sections (41, 43; 45, 47) are each formed by a reinforcement plate, which in particular has a plurality of holes (61).

3. The bearing (1) according to Claim 1 or 2, **characterised in that** the reinforcement (5; 7) is formed as a plate, which consists of a rigid material, such as plastic, for example polypropylene, and is divided into two plate-shaped reinforcement sections (41, 43; 45, 47) by means of the hinge (53; 51), which is realised by a weakened portion in the material situated essentially in the centre of the plate, wherein in particular the weakened portion in the material has a flexible plate strip, which connects the reinforcement sections (41, 43; 45, 47), in particular of essentially constant thickness, which is reduced compared to the reinforcement sections (41, 43; 45, 47), which plate strip is preferably curved concentrically to a bearing axis (S; R) of a cylindrical connection bearing socket (13; 15), which is introduced into the spring body (3), for the functional part or the supporting structure.

4. The bearing (1) according to one of the preceding claims, **characterised in that** the reinforcement (5; 7) is formed by two, in particular essentially identically formed, preferably separate insertion parts, which are each formed by two reinforcement sections (41, 43; 45, 47), which are coupled to each other in a hinged, movable manner and/or are completely embedded, in particular encapsulated, in the elastomer material of the spring body (3).

5. The bearing (1) according to any one of Claims 2 to 4, **characterised in that** the two reinforcement sections (41, 43; 45, 47) and the hinge (53; 51) of in particular each individual insertion part are fabricated from one workpiece, in particular injection-moulded from one plastic workpiece.

6. The bearing (1) according to one of the preceding claims, **characterised in that** the elastomer body (3) has a connection recess, in particular a through-hole, for attaching the functional part or the supporting structure and in particular a further connection recess, in particular a further through-hole, for attaching the supporting structure or the functional part, wherein the reinforcement (5; 7) extends partially around the at least one connection recess.

7. The bearing (1) according to Claim 6, **characterised in that** the at least one connection recess is a bearing socket (13; 15) having a bearing axis (S; R), which is in particular horizontal (H), perpendicular to the vertical suspension direction (V) of the bearing, and/or the at least one connection recess receives a bearing bolt of the functional part and/or of the supporting structure without a rigid reinforcement bushing being arranged in between.

8. The bearing (1) according to Claim 6 or 7, **characterised in that** the two connection recesses are arranged one above the other in a vertical suspension direction (V) and/or the at least one connection recess is formed in a corner region of the spring body (3), which has a polygonal, preferably triangular or quadrangular, in particular square vertical cross section.

9. The bearing (1) according to one of the preceding claims, **characterised in that** the spring body (3) comprises at least three, preferably four, deformation sections, which can be deformed in a hinge-like manner, in particular at a corner or bend region (11a, 11b, 11c, 11d) of the spring body (3), wherein in particular a reinforcement hinge is arranged on at least one of the deformation sections, so that the freedom of movement of the at least one deformation section is limited essentially to a hinge movement in one pivot plane and/or the at least one deformation section is given a first, low degree of reinforcement for a hinge movement in one pivot plane and a second, larger degree of reinforcement in the other directions of movement from the hinge movement, wherein the first degree of reinforcement is less than the second degree of reinforcement, and/or that the reinforced deformation section in each case defines an essentially horizontal pivot axis, wherein in particular the several pivot axes are arranged parallel to each other.

10. The bearing (1) according to one of the preceding claims, **characterised in that** the spring body (3) has a base body, which runs round in an annular manner and has at least three corner regions, preferably four corner regions (11a, 11b, 11c, 11d), wherein a connection recess is formed at at least one corner region (11a, 11c), preferably a connection recess is formed in each case at two diametrically mutually opposite corner regions (11a; 11c), and at least one corner region (11b; 11d), preferably in each case two diametrically mutually opposite corner regions (11b, 11d), is free of a hinge, in particular of a reinforcement material, and/or free of a connection recess.

11. The bearing (1) according to one of the preceding claims, **characterised in that** the spring body (3) has an annular base body having a periphery outer side and a central cut-out, which defines the spring range of the bearing, in particular in the vertical suspension direction (V), and is defined by two cut-out portions (21, 33), in particular in the vertical cross section, which portions are in particular separated from each other by means of a tapering in the cross section, which forms in particular two stop faces (29; 25), which limit a vertical movement of two connection recesses arranged one above the other in the vertical suspension direction (V) towards each other and are diametrically opposite each other in the suspension direction (V).

12. The bearing (1) according to Claim 11, **characterised in that** the cut-out is free of any bearing parts and/or the two cut-out portions (21, 23) are limited by a periphery inner side of the spring body (3), which is shaped in correspondence with the basic shape of the periphery outer side, in particular according to a square or cube, of the bearing, wherein the side faces of the periphery outer and inner sides which are opposite each other at the shortest radial distance lie parallel to each other.

13. The bearing (1) according to any one of Claims 6-8 or 10-12, **characterised in that** the hinge (53; 51) is assigned in a spatially adjacent manner to a connection recess and is arranged between the adjacent periphery outer side and the said connection recess (13; 15).

14. The bearing (1) according to any one of Claims 6-8 or 10-13, **characterised in that** it consists exclusively of the spring body (3) and the reinforcement (5; 7) and that the at least one connection recess is designed for directly receiving a bearing bolt of the functional part and/or of the supporting structure.

## Revendications

1. Palier élastique (1) pour suspendre une pièce fonctionnelle sollicitée dynamiquement, comme une installation de gaz d'échappement d'un véhicule automobile sur une structure porteuse, comme une carrosserie de véhicule automobile, comprenant un corps de ressort (3) constitué d'un matériau élastomère et un renforcement (5 ; 7) relié solidement au corps de ressort (3), constitué d'un matériau plus rigide par rapport au matériau élastomère, comme le plastique, **caractérisé en ce que** le renforcement (5 ; 7) comprend deux portions de renforcement (41, 43 ; 45, 47) et est conçu avec une charnière à film (53 ; 51), qui couple les portions de renforcement (41, 43 ; 45, 47) l'une à l'autre de manière pivotante en articulation à charnière.

2. Palier (1) selon la revendication 1, **caractérisé en ce que** la charnière à film (53 ; 51)couple les portions de renforcement (41, 43 ; 45, 47) essentiellement dans un plan de pivotement unique et/ou les portions de renforcement (41, 43 ; 45, 47) sont respectivement formées par une plaque de renforcement, qui présente notamment plusieurs trous (61).

3. Palier (1) selon les revendications 1 ou 2, **caractérisé en ce que** le renforcement (5 ; 7) est conçu comme une plaque constitué d'un matériau rigide, comme du plastique, par exemple du polypropylène, qui est divisé par l'articulation à charnière (53 ; 51), qui est réalisée à travers un affaiblissement du matériau situé essentiellement au milieu de la plaque, en deux portions de renforcement en forme de plaque (41, 43 ; 45, 47), dans lequel notamment l'affaiblissement de matériau présente une bande de plaque flexible, reliant les portions de renforcement (41, 43 ; 45, 47), notamment d'épaisseur essentiellement constante, réduite par rapport aux portions de renforcement (41, 43 ; 45, 47), laquelle bande de plaque est incurvée de préférence concentriquement par rapport à un axe de de palier (S ; R) d'un coussinet de palier de raccordement (13 ; 15) cylindrique, ménagé dans le corps de ressort (3), destiné à la pièce fonctionnelle ou à la structure porteuse.

4. Palier (1) selon une des revendications précédentes, **caractérisé en ce que** le renforcement (5 ; 7) est formé par deux pièces d'insertion de préférence séparées, formées notamment essentiellement à l'identique, qui sont formées par respectivement deux portions de renforcement (41, 43 ; 45, 47) couplées l'une à l'autre de manière mobile en articulation à charnière et/ou sont incorporés en totalité, notamment moulés par injection autour du corps de ressort (3) dans le matériau élastomère.

5. Palier (5) selon une des revendications 2 à 4, **caractérisé en ce que** les deux portions de renforcement (41, 43 ; 45, 47) et l'articulation à charnière (53 ; 51) notamment de chaque pièce d'insertion individuelles sont fabriquée dans une pièce usinée, notamment moulées par injection à partir d'une pièce en plastique.

6. Palier (1) selon une des revendications précédentes, **caractérisé en ce que** le corps élastomère présente un évidement de raccordement, notamment un alésage traversant, pour relier la pièce fonctionnelle ou la structure porteuse et notamment un évidement de raccordement supplémentaire, notamment un alésage traversant supplémentaire, pour relier la structure porteuse ou la pièce fonctionnelle, dans lequel le renforcement (5 ; 7) s'étend partiellement autour d'au moins un évidement de raccordement.

7. Palier (1) selon la revendication 6, **caractérisé en ce que** le au moins un évidement de raccordement est un coussinet de palier (13 ; 15) avec un axe de palier (S ; R), qui est notamment horizontal (H), perpendiculairement à la direction de suspension verticale (V) du palier, et/ou le au moins un évidement de raccordement renferme un tourillon de palier de la pièce fonctionnelle et/ou la structure porteuse sans intercalage d'un manchon de renforcement rigide.

8. Palier (1) selon les revendications 6 ou 7, **caractérisé en ce que** les deux évidements de raccordement sont disposés l'un sur l'autre dans une direction de suspension verticale (V) et/ou le au moins un évidement de raccordement est réalisé dans une zone de coin de la section transversale verticale du corps de ressort (3) polygonal, de préférence triangulaire ou carré, notamment quadrangulaire.

9. Palier (1) selon une des revendications précédentes, **caractérisé en ce que** le corps de ressort (3) comprend au moins trois, de préférence quatre, portions de déformation déformables conformément à l'articulation de charnière notamment sur une zone de coin ou de pli (11a, 11b, 11c, 11d) du corps de ressort (3), dans lequel notamment sur au moins une des portions de déformation une articulation à charnière de renforcement est disposée, dès que la liberté de mouvement d'au moins une portion de déformation est limitée essentiellement dans un plan de pivotement jusqu'à un mouvement d'articulation de charnière et/ou à au moins une portion de déformation un premier degré de renforcement moindre pour un mouvement d'articulation de charnière dans un plan de pivotement et un deuxième degré de renforcement plus grand dans les directions de mouvement restantes par rapport au mouvement d'articulation à charnière sont conférés, dans lequel le premier degré de renforcement est plus petit que le deuxième degré de renforcement et/ou **en ce que** la portion de déformation renforcée définit respectivement un axe de pivotement essentiellement horizontal, dans lequel notamment la pluralité d'axes de pivotement sont disposés parallèlement les uns aux autres.

10. Palier (1) selon une des revendications précédentes, **caractérisé en ce que** le corps de ressort (3) présente un corps de base circonférentiel annulaire avec au moins trois zones de coin, de préférence quatre zones de coin (11a, 11b, 11c, 11d), dans lequel sur au moins une zone de coin (11a, 11c) un évidement de raccordement, de préférence sur deux zones de coin (11a, 11c) diamétralement en vis-à-vis, respectivement un évidement de raccordement est réalisé et au moins une zone de coin (11b, 11d), de préférence deux zones de coin (11b, 11d) diamétralement en vis-à-vis, est exempte d'une articulation à charnière, notamment d'un matériau de renforcement et/ou est exempte d'un évidement de raccordement.

11. Palier (1) selon une des revendications précédentes, **caractérisé en ce que** le corps de ressort (3) présente un corps de base annulaire avec un côté circonférentiel externe et une cavité centrale, déterminant le trajet de ressort du palier notamment dans la direction de suspension verticale (V), qui es définie notamment dans la section transversale verticale par deux sections de cavité (21, 23), qui sont séparées l'une de l'autre notamment par un amincissement de section transversale, qui forme notamment deux, un mouvement vertical de deux évidements de raccordement disposés l'un sur l'autre dans la direction de suspension verticale (V) sur des surfaces de butée (29 ; 25) diamétralement en vis-à-vis dans la direction de suspension (V), contiguës l'une à l'autre.

12. Palier (1) selon la revendication 1, **caractérisé en ce que** l'évidement exempt de toute partie de palier est non rempli et/ou les deux sections d'évidement (21, 23) sont délimitées par un côté circonférentiel interne du corps de ressort (3), qui est formé de manière correspondante à la forme de base du côté circonférentiel externe, notamment en parallélépipède ou en cube, du palier, dans lequel les surfaces de côté en vis-à-vis dans un espacement radial le plus court du côté circonférentiel externe et interne sont situées parallèlement l'une à l'autre.

13. Palier (1) selon une des revendications 6-8 ou 10-12, **caractérisé en ce que** l'articulation à charnière (53 ; 51) est affectée de manière voisine localement à un évidement de raccordement et est disposée entre le côté circonférentiel externe voisin et cet évidement de raccordement (13 ; 15).

14. Palier (1) selon une des revendications 6-8 ou 10-13, **caractérisé en ce que** il est constitué exclusivement d'un corps de ressort (3) et du renforcement (5 ; 7) et **en ce que** au moins un évidement de raccordement est réalisé afin de renfermer directement un tourillon de palier de la pièce fonctionnelle et/ou de la structure porteuse
